# EUROPÄISCHE PATENTSCHRIFT

(11) **EP 1 995 100 B1**
(45) Veröffentlichungstag und Bekanntmachung des Hinweises auf die Patenterteilung: **11.04.2012**
(21) Anmeldenummer: 08001998.7
(22) Anmeldetag: 02.02.2008
(51) Int. Cl.: B60J 7/12, B60J 7/14

(54) **Ablegbares Dach für ein Cabriolet**
Collapsible roof for a convertible
Capote pour un cabriolet

(30) Priorität: 24.05.2007 DE 102007024171
(43) Veröffentlichungstag der Anmeldung: 26.11.2008
(73) Patentinhaber: Dr. Ing. h.c. F. Porsche AG, 70435 Stuttgart (DE)
(72) Erfinder: Froeschle, Mathias, 73760 Ostfildern (DE)

(56) Entgegenhaltungen:
- DE-C1- 10 006 296
- US-A- 5 785 375
- US-A1- 2002 074 832
- US-A1- 2004 051 341

## Beschreibung

Bei der Erfindung wird ausgegangen von einem ablegbaren Dach für ein Cabriolet, gemäß Oberbegriff des Patentanspruchs 1. Eine solche Dachanordnung ist aus der US 5,785,375 bekannt.

Ein Dach für ein Cabriolet ist aus der DE 100 06 296 C1 bekannt. Es umfasst eine Hauptdachanordnung, die ein durch ein Viergelenk gebildetes Hauptgestänge, ein von dem Hauptgestänge bewegbar gehaltenes Hauptdachelement und ein Verdecklager aufweist. Das Hauptgestänge ist schwenkbar mit Verdecklager und Hauptdachelement verbunden. Das Dach umfasst ferner zumindest eine Zusatzdachanordnung mit einem Zusatzdachelement, das in einer Schließstellung des Daches in Reihe zu dem Hauptdachelement liegt. In einer Bewegung des Daches in eine Ablagestellung wird das Zusatzdachelement über oder unter das Hauptdachelement bewegt. Dazu ist das Zusatzdachelement über ein zwei Verbindungslenker aufweisendes Verbindungsgestänge mit dem Hauptdachelement verbunden. Die Steuerung der Bewegung des Zusatzdachelements erfolgt über einen einzelnen Steuerlenker eines Steuergestänges, das mit einem Ende mit dem Hauptgestänge und mit dem anderen Ende mit dem Verbindungsgestänge verbunden ist. Das Steuergestänge und das Verbindungsgestänge sind als Zusatzlagereinrichtung der Zusatzdachanordnung zugeordnet.

Aufgabe der Erfindung ist es, ein optimiertes Dach der eingangs genannten Art anzugeben.

Gelöst wird diese Aufgabe mit einem Dach, das die in Patentanspruch 1 genannten Merkmale aufweist. Ausführungsbeispiele sind Gegenstand der Unteransprüche.

Die mit der Erfindung hauptsächlich erzielten Vorteile sind darin zu sehen, dass das Zusatzdachelement "nach unten", also am Verdecklager abgestützt ist, was das Hauptgestänge der Hauptlagereinrichtung entlastet. Ferner wird durch die Relativbewegung des Zusatzdachelements gegenüber dem Verdecklager die Bewegung durch den Steuerlenker in die Zusatzlagereinrichtung eingesteuert, so dass die gewünschte Bewegung für das Erreichen einer Ablagestellung und umgekehrt von der Ablagestellung in eine Schließstellung erzeugt wird. Durch die erfindungsgemäße Abstützung des Zusatzdachelements an dem Verdecklager wird zusätzlich die Positionierung des Zusatzdachelements gegenüber dem Hauptdachelement verbessert. Außerdem wird die Freiheit bei der Gestaltung des Bewegungsablaufes des Zusatzdachelements erhöht, wodurch insbesondere in Ablagestellung eine optimierte Packungshöhe des Daches erzielt werden kann. Das Dach ist ein Cabrioverdeck mit einem äußeren Stoffbezug und wird daher auch als Softtop bezeichnet.

Ausführungsbeispiele der Anordnung des zumindest einen Verbindungslenkers und des zumindest einen Steuerlenkers sind in den Ansprüchen 2, 3, 4 und 5 angegeben.

Eine bevorzugtes Ausführungsbeispiel des Daches ist Gegenstand von Anspruch 6, wobei das weitere Dachelement Bestandteil einer weiteren Zusatzdachanordnung oder alternativ beliebig in die Bewegung der Hauptdachanordnung eingekoppelt sein kann, wie Anspruch 9 beschreibt.

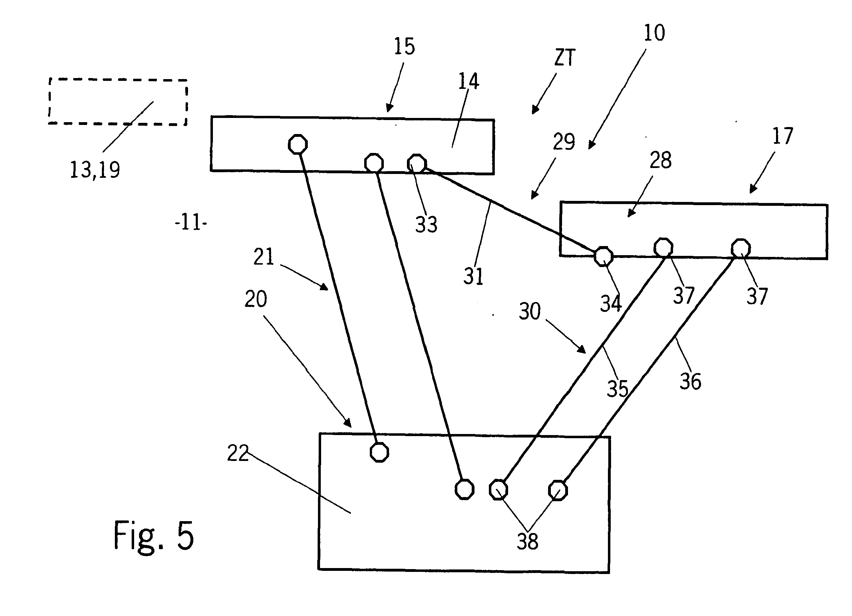

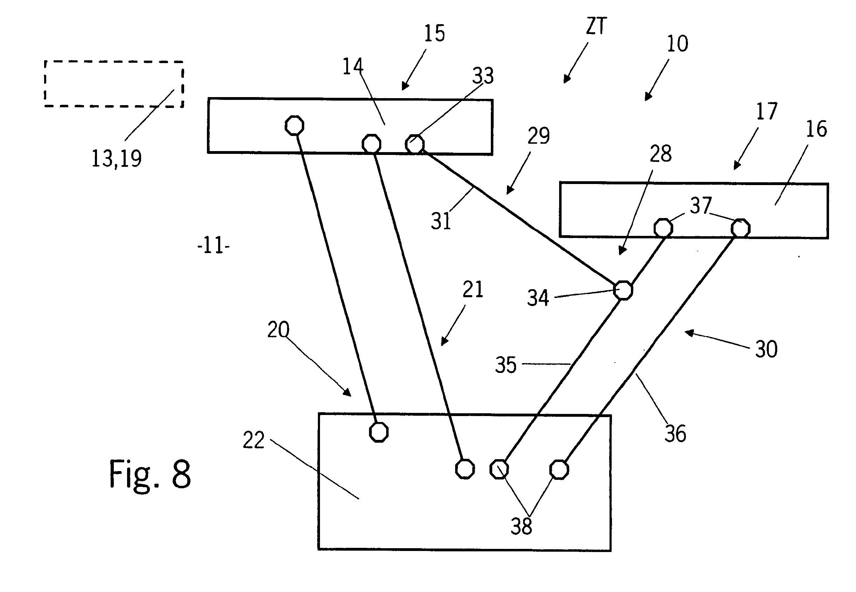

Die Erfindung wird nachfolgend anhand von Ausführungsbeispielen mit Bezug auf die Zeichnung näher erläutert, wobei die in den Fig. 5, 8 und 8 gezeigten Dächer 10 nicht unter den Patentanspruch 1 fallen und somit nicht zur Erfindung gehören. Es zeigen:
- Fig. 1: ausschnittweise ein Cabriolet mit einem in Schließstellung vorliegen Dach nach einem ersten Ausführungsbeispiel,
- Fig. 2: das Cabriolet mit dem ablegbaren Dach in einer Zwischenstellung,
- Fig. 3: das Cabriolet mit dem ablegbaren Dach in einer Ablagestellung und
- Fig. 4 bis 9: jeweils ein weiteres Ausführungsbeispiel eines Daches in einer zwischen der Schließstellung und der Ablagestellung liegenden Zwischenstellung.

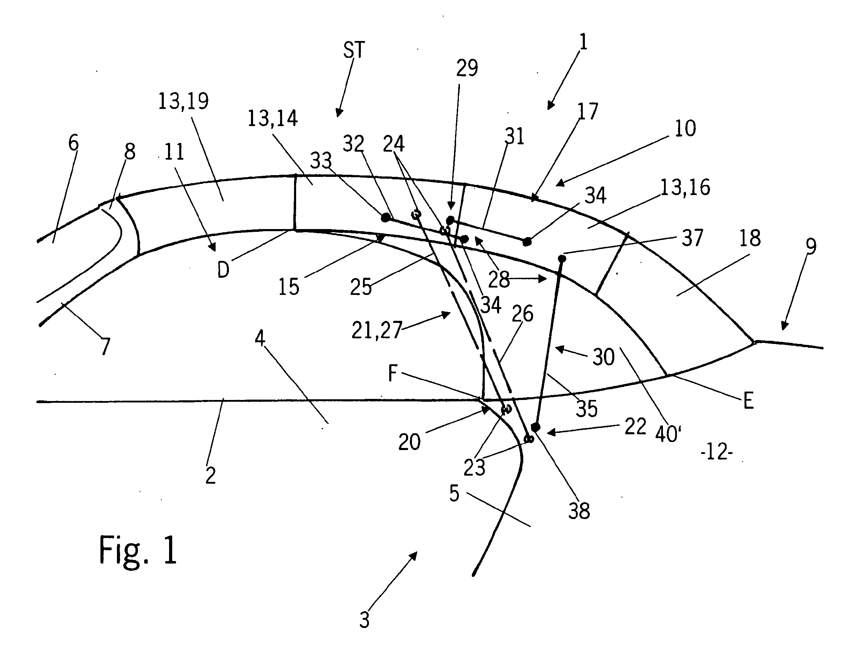

In Fig. 1 ist ausschnittweise als Personenkraftwagen ein Cabriolet 1 dargestellt, von dem eine oberhalb einer Gürtellinie 2 offene Karosserie 3 mit einer Seitentür 4 und einer hinteren Seitenwand 5 teilweise zu sehen ist. Zwischen einem eine Windschutzscheibe 6 einrahmenden Windlauf 7 mit einem oberen Querrahmenschenkel 8 und einem nicht näher gezeigten Heckabschnitt 9 des Cabriolets 1 erstreckt sich ein ablegbares Dach 10, das in Fig. 1 in seiner einen Fahrgastraum 11 überspannenden Schließstellung ST am Cabriolet 1 gezeigt ist. Im Heckabschnitt 9 befindet sich ein Ablagekasten 12 für das Dach 10. Dem Ablagekasten 12 kann ein beispielsweise bewegbarer Deckel, der hier nicht eingezeichnet ist, zugeordnet sein; alternativ kann der Ablagekasten 12 ohne einen solchen Deckel auskommen.

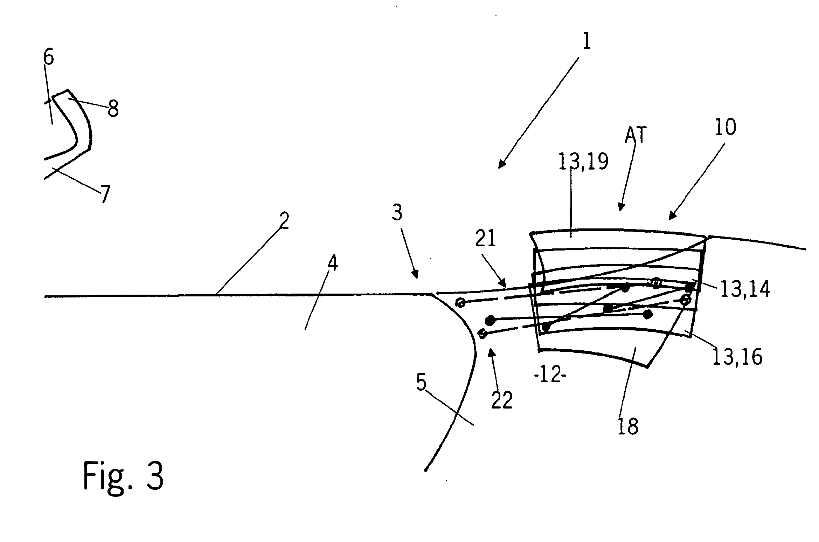

Das Dach 10 weist zumindest zwei Dachelemente 13 auf, von denen ein Dachelement 13 ein Hauptdachelement 14 einer Hauptdachanordnung 15 und ein anderes Dachelement 13 ein Zusatzdachelement 16 einer Zusatzdachanordnung 17 ist. Ferner kann das Dach 10 ein Heckdachelement 18 ggf. mit einer Heckscheibe (nicht dargestellt) aufweisen. Das Hauptdachelement 14 kann in Schießstellung ST an dem Querrahmenschenkel 8 anliegen oder es kann - wie in Fig. 1 gezeigt - ein weiteres Dachelement 13 als Dachspitze 19 vorgesehen sein, die in der Schließstellung ST zwischen dem Windlauf 7 und dem Hauptdachelement 14 liegt. Sämtliche Dachelemente 13 und das Heckdachelement 18 liegen in Reihe hintereinander. In einer in Fig. 3 gezeigten Ablagestellung AT, in der das Dach 10 zumindest teilweise in dem Ablagekasten 12 aufgenommen ist, liegen die Dachelemente 13 und das Heckdachelement 18 übereinander, wodurch die Packhöhe des Daches 10 gegeben ist. Es ist in Fig. 3 ferner zu sehen, dass in der Ablagestellung AT das vordere Dachelement 13, hier die Dachspitze 19, den Ablagekasten 12 zumindest teilweise verschließt.

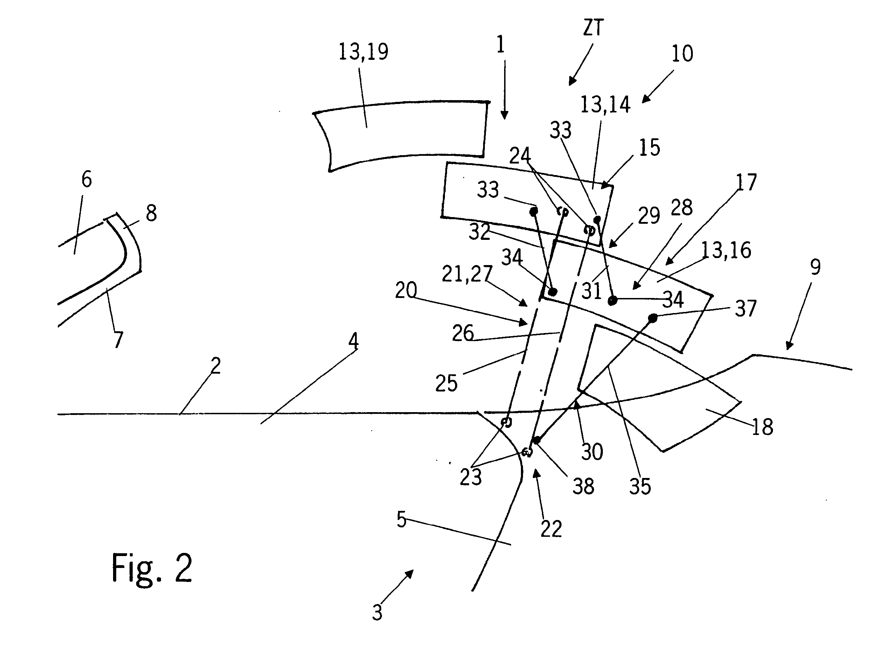

Anhand von Fig. 2, die das Dach 10 in einer Zwischenstellung ZT zwischen der Schließstellung ST und der Ablagestellung AT während der rückwärts gerichteten, also in Richtung Heckabschnitt 9, Ablagebewegung des Daches 10 zeigt, werden die Bestandteile des Daches 10 näher erläutert. Die Hauptdachanordnung 15 umfasst das Hauptdachelement 14 und eine Hauptlagereinrichtung 20 für das Hauptdachelement 14, um es gegenüber der Karosserie 3 von der Schließstellung ST in die Ablagestellung AT und umgekehrt bewegen zu können. Die Hauptlagereinrichtung 20 besitzt ein Hauptgestänge 21 und ein Verdecklager 22, an dem das Hauptgestänge 21 mit seinem einen Ende in zumindest einem ersten Gelenk 23 angelenkt ist. Mit seinem anderen Ende ist das Hauptgestänge 21 mit dem Hauptdachelement 14 in zumindest einem zweiten Gelenk 24 beweglich verbunden. Das Verdecklager 22 ist einteilig an der Karosserie 3 oder daran befestigt als separates Bauteil ausgeführt. Das Verdecklager 22 mit dem zumindest einen Gelenk 23 liegt vorzugsweise unterhalb der Gürtellinie 2. Wie Fig. 2 zeigt, ist das Hauptgestänge 21 als ein zwei Hauptlenker 25 und 26 umfassendes Viergelenk 27 mit den Gelenken 23 und 24 ausgebildet. Das weitere Dachteil 13, hier die Dachspitze 19, ist in einer beliebigen Art und Ausführung einer geeigneten Kinematik, die hier nicht gezeigt ist, an die Hauptdachanordnung 15 angekoppelt, um es mit dieser zusammen wahlweise in die Schließ- und Ablagestellung ST und AT bewegen zu können. Das Heckdachelement 18 ist entweder separat an der Karosserie 3 oder an der Hauptdachanordnung 15 oder an der der Zusatzdachanordnung 17 angelenkt, um es zwischen der Schließstellung ST und der Ablagestellung AT bewegen zu können.

Die Zusatzdachanordnung 17 umfasst das Zusatzdachelement 16 und eine Zusatzlagereinrichtung 28 für das Zusatzdachelement 16, um es zwischen der Schließstellung ST und der Ablagestellung AT bewegen zu können. Die Schließbewegung des Daches 10 ist im Übrigen entgegen der Ablagebewegung orientiert, also von dem Heckabschnitt 9 in Richtung Windlauf 7 gerichtet. Die Zusatzlagereinrichtung 28 weist für ein entsprechendes Bewegen und Stützen des Zusatzdachelements 16 ein Verbindungsgestänge 29 und ein Steuergestänge 30 auf. Mit dem Verbindungsgestänge 29 ist die Zusatzdachanordnung 17 mit der Hauptdachanordnung 15 relativ zu dieser bewegbar verbunden. Das Verbindungsgestänge 29 weist zumindest einen Verbindungslenker 31 und/oder 32 auf, der in einem dritten Gelenk 33 mit der Hauptdachanordnung 15 und einem vierten Gelenk 34 mit der Zusatzdachanordnung 17 verbunden ist. Das Steuergestänge 30 dient der Steuerung der Bewegung des Zusatzdachelements 16 zwischen den beiden Endstellungen (Schließstellung ST und Ablagestellung AT) des Daches 10 und es besitzt zumindest einen Steuerlenker 35, 36, der in einem fünften Gelenk 37 mit der Zusatzdachanordnung 17 und in einem sechsten Gelenk 38 mit dem Verdecklager 22 verbunden ist.

Im Folgenden wird auf unterschiedliche Ausführungsbeispiele des Daches 10 näher eingegangen. In sämtlichen Fig. 1 bis 9 sind gleiche beziehungsweise gleich wirkende Teile mit denselben Bezugszeichen versehen. Außerdem werden lediglich die den unterschiedlichen Ausführungsbeispielen zugeordneten Unterschiede erläutert. Die Ausführungsbeispiele der verschiedenen, in den Fig. 1 bis 4 und jeweils in den Fig. 5 bis 9 gezeigten Dächer 10 unterscheiden sich im Wesentlichen durch unterschiedlich ausgeführte Zusatzlagereinrichtungen 28 und insbesondere durch unterschiedlich ausgeführte Verbindungsgestänge 29 und/oder Steuergestänge 30.

Grundsätzlich lässt sich festhalten, dass das Verbindungsgestänge 29 lediglich einen Verbindungslenker 31, 32 oder zumindest einen ersten und zweiten Verbindungslenker 31, 32 sowie das Steuergestänge 30 lediglich einen ersten Steuerlenker 35, 36 oder zumindest einen ersten und zweiten Steuerlenker 35, 36 aufweist. Insbesondere ist vorgesehen, dass das Verbindungsgestänge 29 in allen Ausführungsbeispielen eine Anzahl der Verbindungslenker 31, 32 aufweist, die unterschiedlich gegenüber der Anzahl der Steuerlenker 35, 36 des Steuergestänges 30 ist; vorzugsweise weist das Verbindungsgestänge 29 einen Verbindungslenker 31 oder 32 und das Steuergestänge 30 zumindest zwei Steuerlenker 35 und 36 auf, oder das Verbindungsgestänge 29 weist zumindest zwei Verbindungslenker 31 und 32 auf und das Steuergestänge 30 besitzt lediglich einen der Steuerlenker 35 oder 36. Grundsätzlich wäre es aber denkbar, sowohl das Verbindungsgestänge 29 als auch das Steuergestänge 30 entsprechend mit zumindest zwei Verbindungslenkern 31 und 32 bzw. zwei Steuerlenkern 35 und 36 auszustatten.

Die zugeordneten ersten bis sechsten Gelenke 23, 24, 33, 34, 37, 38 können wie folgt angeordnet sein: Die ersten Gelenke 23 liegen am Verdecklager 22, die zweiten Gelenke 24 liegen an dem Hauptdachelement 14, die dritten Gelenke 33 liegen an dem Hauptdachelement 14, die vierten Gelenke 34 liegen an dem Zusatzdachelement 16 und/oder an dem Steuergestänge 30, die fünften Gelenke 37 liegen an dem Zusatzdachelement 16 und/oder an dem Verbindungsgestänge 29, die sechsten Gelenke 38 liegen an dem Verdecklager 22.

Nach einem ersten Ausführungsbeispiel des Daches 10 bzw. der Zusatzlagereinrichtung 28 gemäß Fig. 1 bis 3 weist das Verbindungsgestänge 29 zwei Verbindungslenker 31 und 32 auf, die in den dritten Gelenken 33 an dem Hauptdachelement 14 und die in den vierten Gelenken 34 an dem Zusatzdachelement 16 angelenkt sind. Die beiden Verbindungslenker 31, 32 sind als Viergelenk angeordnet, wobei die dritten Gelenke 33 hintereinander liegen. Die vierten Gelenke 34 liegen ebenfalls hintereinander. Das Steuergestänge 30 weist lediglich einen der Steuerlenker 35 auf, dessen fünftes Gelenk 37 an dem Zusatzdachelement 16 und dessen sechstes Gelenk 38 an dem Verdecklager 22 liegt. Die Gelenke 34 und 37 liegen hintereinander an dem Zusatzdachelement 16.

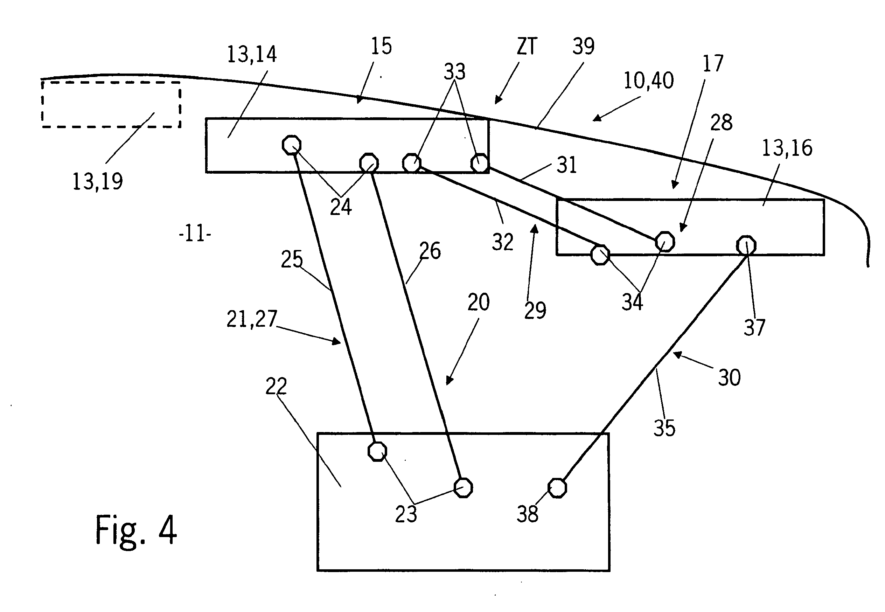

Nach dem zweiten Ausführungsbeispiel entsprechend Fig. 4 ist das Dach 10 noch mit einem äußeren Verdeckbezug 39 versehen, der zumindest eine Lage bzw. Schicht umfassen kann. Der Verdeckbezug 39 erstreckt sich von dem vorderen bzw. vordersten Dachelement 13, hier der Dachspitze 19, bis über das Heckdachelement 18 (Fig. 1 bis 3) hinweg. Ansonsten ist das Dach 10, insbesondere die Zusatzlagereinrichtung 28, nach Fig. 4 wie das Dach 10, insbesondere die Zusatzlagereinrichtung 28, des ersten Ausführungsbeispiels nach den Fig. 1 bis 3 ausgebildet. Die Dachelemente 13 und das Heckdachelement 18 bilden dabei so genannte Flächenspriegel, die den Verdeckbezug 39 in der Schließstellung ST in Form stützen und daher auch Formgebungselemente bezeichnet werden könnten. Die Flächenspriegel weisen dabei eine in Fahrzeuglängsrichtung gemessene Länge auf, die deutlich größer als eine Länge so genannter bekannter Spriegel ist, welche Spriegel lediglich eine linienförmige Abstützung des Verdeckbezugs 39 bewirken. Sämtliche Dachelemente 13 bzw. Flächenspriegel und das Heckdachelement 18 (Fig. 1 bis 3) liegen in Reihe hintereinander, wobei vorzugsweise vorgesehen ist, dass die Dachelemente 13 und das Heckdachelement 18 in der Schließstellung ST aneinander stoßen, um so eine durchgehende formgebende Fläche für den Verdeckbezug 39 zu bilden. Lediglich ein seitlicher, zwischen der Seitenwand 5 und oberhalb der Gürtellinie 2 liegende Säulenabschnitt 40' (Fig. 1), hier der B-Säulenabschnitt, des Verdeckbezugs 39 (Fig. 4) wird nicht von Dachelementen 13 unterstützt. Dieser Säulenabschnitt 40' wird hier definiert durch beispielsweise drei Eckpunkte D, E, F (Fig. 1), wobei zwischen D und F zumindest ein so genannter Dachrahmen vorgesehen sein kann. E und F werden von der Gürtellinie 2 sowie D und E werden von den seitlichen Rändern der Dachelemente 13 miteinander verbunden. Ein solches Softtop bzw. Stoffverdeck 40 mit dem Verdeckbezug 39 kann an den in den übrigen Fig. 5 bis 9 gezeigten Dächern 10 ebenfalls vorgesehen sein.

Bei dem dritten Ausführungsbeispiel gemäß Fig. 5 ist die Zusatzlagereinrichtung 28 wie folgt ausgebildet: Das Verbindungsgestänge 29 besitzt lediglich einen der Verbindungslenker 31, das dritte Gelenk 33 liegt am Hauptdachelement 14 und das vierte Gelenk 34 liegt am Zusatzdachelement 16. Das Steuergestänge 30 besitzt hier zwei Steuerlenker 35, 36, die fünften Gelenke 37 liegen an dem Zusatzdachelement 16 und die sechsten Gelenke 38 liegen hintereinander am Verdecklager 22, so dass das Steuergestänge 30 ein Viergelenk bildet. Am Zusatzdachelement 16 liegen das vierte Gelenk 34 und die beiden fünften Gelenke 37 hintereinander.

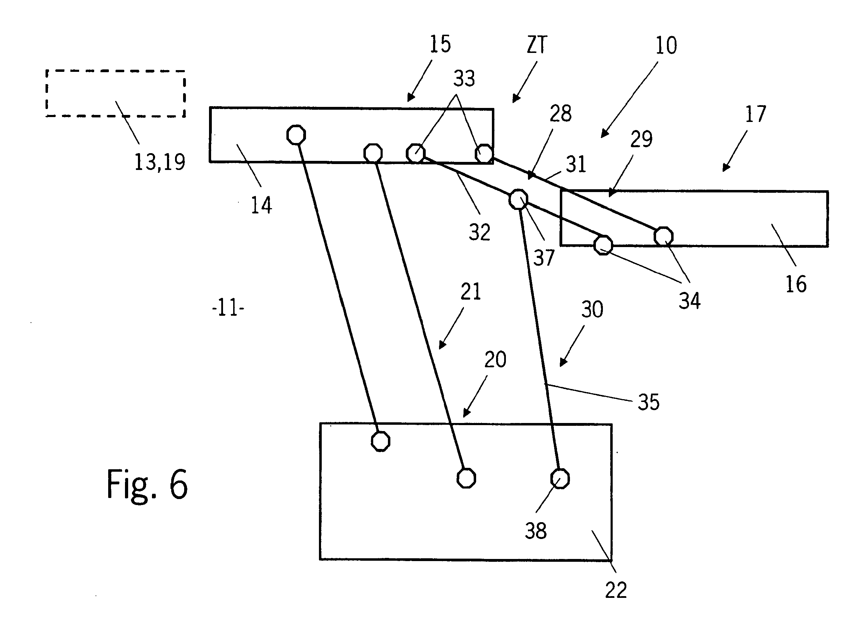

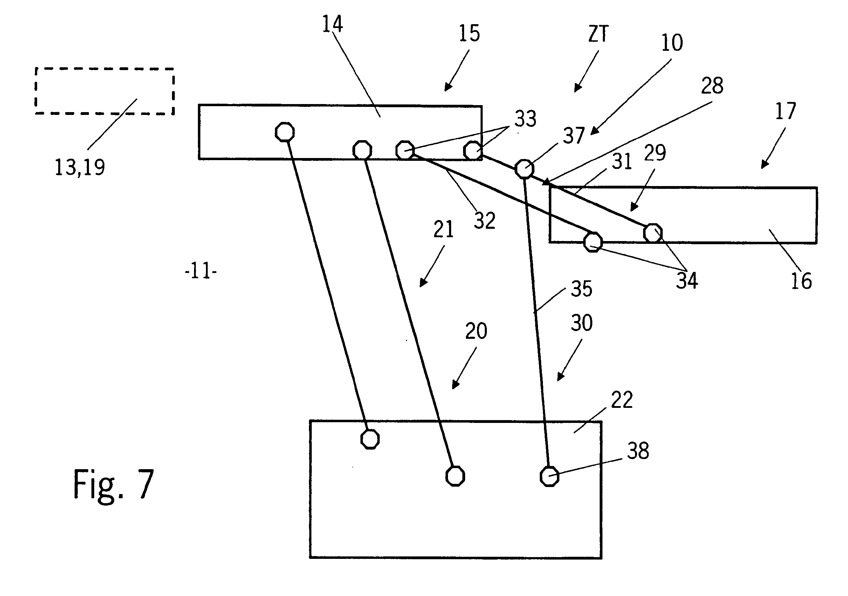

Gemäß eines vierten Ausführungsbeispiels nach Fig. 6 ist die Zusatzlagereinrichtung 28 mit einem Verbindungsgestänge 29 mit zwei Verbindungslenker 31 und 32 und das Steuergestänge mit nur einem Steuerlenker 35 ausgestattet, wie es im Zusammenhang mit dem Ausführungsbeispiel nach den Fig. 1 bis 3 beschrieben ist. Im Unterschied dazu ist der einzige Steuerlenker 35 mit seinem fünften Gelenk 37 jedoch am Verbindungsgestänge 29 und insbesondere an dem Verbindungslenker 32 angelenkt, der von den beiden Verbindungslenkern 31 und 32 auch als vorderer bzw. unterer Verbindungslenker 32 bezeichnet werden kann. Entsprechend ist nach dem fünften Ausführungsbeispiel gemäß Fig. 7 im Unterschied zum eben beschriebenen vierten Ausführungsbeispiel nun der Steuerlenker 35 an dem hinteren bzw. oberen Verbindungslenker 31 des Verbindungsgestänges 29 mit seinem fünften Gelenk 37 angelenkt.

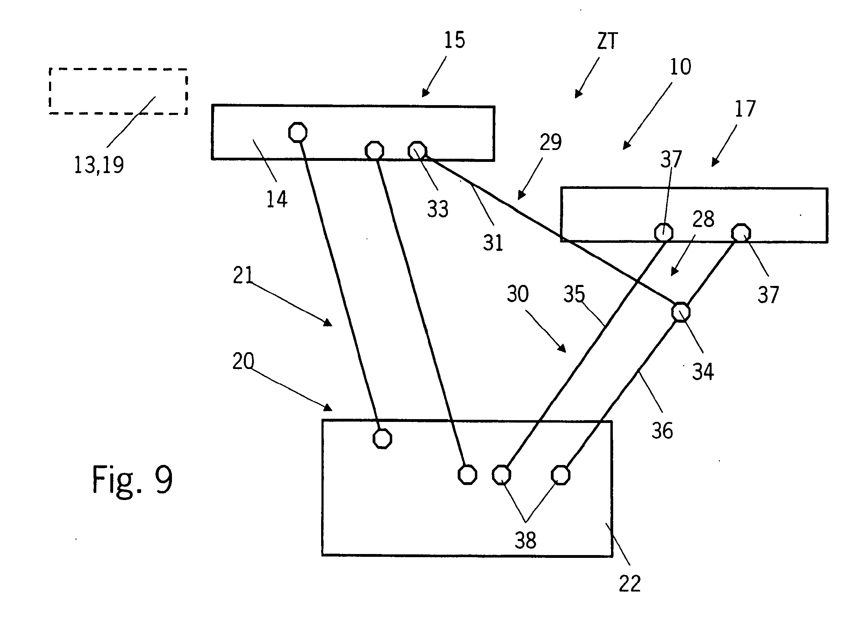

Ein sechstes Ausführungsbeispiel einer Zusatzlagereinrichtung 28, die in Fig. 8 zu sehen ist, zeichnet sich aus durch ein Verbindungsgestänge 29 mit nur einem Verbindungslenker 31, der mit seinem vierten Gelenk 34 an dem Steuergestänge 30 angelenkt ist. Das Steuergestänge 30 umfasst zwei Steuerlenker 35 und 36. Das vierte Gelenk 34 liegt an dem vorderen Steuerlenker 35, wohingegen bei dem siebten Ausführungsbeispiel einer Zusatzlagereinrichtung 28 entsprechend Fig. 9 das vierte Gelenk 34 an dem hinteren Steuerlenker 36 liegt. Ansonsten sind die Dächer 10 nach den Fig. 8 und 9 wie das Dach 10 nach Fig. 5 ausgebildet.

## Patentansprüche

1. Ablegbares Dach (10) für ein Cabriolet (1), mit einer Hauptdachanordnung (15), die ein Hauptdachelement (14) und eine Hauptlagereinrichtung (20) mit einem Verdecklager (22) und einem Hauptgestänge (21) für das Hauptdachelement (14) umfasst, und mit wenigstens einer ersten Zusatzdachanordnung (17), die ein Zusatzdachelement (16), eine Zusatzlagereinrichtung (28) mit einem Verbindungsgestänge (29) für das Zusatzdachelement (16) sowie ein Steuergestänge (30) umfasst, wobei das Zusatzdachelement (16) in Schließstellung (ST) des Daches (10) in Reihe hinter dem Hauptdachelement (14) liegt und wobei das Verbindungsgestänge (29) wenigstens einen ersten Verbindungslenker (31) und zumindest einen zweiten Verbindungslenker (32) aufweist, die mit der Hauptdachanordnung (15) verbunden sind, **dadurch gekennzeichnet, dass** das Steuergestänge (30) lediglich einen ersten, mit dem Verdecklager (22) verbundenen Steuerlenker (35) aufweist, und dass das ablegbare Dach (10) als Stoffverdeck (40) mit einem äußeren Stoffbezug ausgebildet ist.

2. Ablegbares Dach nach Anspruch 1, **dadurch gekennzeichnet, dass** der zumindest eine Verbindungslenker (31, 32) mit dem Zusatzdachelement (16) und dem Hauptdachelement (14) verbunden ist.

3. Ablegbares Dach nach einem der vorhergehenden Ansprüche, **dadurch gekennzeichnet, dass** der zumindest eine Steuerlenker (35, 36) mit dem Verdecklager (22) und dem Zusatzdachelement (16) verbunden ist.

4. Ablegbares Dach nach einem der vorhergehenden Ansprüche, **dadurch gekennzeichnet, dass** der zumindest eine Steuerlenker (35, 36) mit dem Verdecklager (22) und dem Verbindungsgestänge (29) verbunden ist.

5. Ablegbares Dach nach einem der vorhergehenden Ansprüche, **dadurch gekennzeichnet, dass** der zumindest eine Verbindungslenker (31, 32) mit dem Steuergestänge (30) und dem Hauptdachelement (14) verbunden ist.

6. Ablegbares Dach nach einem der vorhergehenden Ansprüche, **gekennzeichnet durch** ein weiteres Dachelement (13), insbesondere eine Dachspitze (19).

7. Ablegbares Dach nach Anspruch 6, **dadurch gekennzeichnet, dass** das weitere Dachelement (13) in die Bewegung der Hauptdachanordnung (15) eingekoppelt ist.

## Claims

1. Collapsible roof (10) for a convertible (1), with a main roof arrangement (15), which comprises a main roof element (14) and a main bearing device (20) with a convertible top bearing (22) and a main linkage (21) for the main roof element (14), and with at least one first additional roof arrangement (17) which comprises an additional roof element (16), an additional bearing device (28) with a connecting linkage (29) for the additional roof element (16), and a control linkage (30), wherein, in the closed position (ST) of the roof (10), the additional roof element (16) lies in series behind the main roof element (14), and wherein the connecting linkage (29) has at least one first connecting link (31) and at least one second connecting link (32), which are connected to the main roof arrangement (15), **characterized in that** the control linkage (30) has only a first control link (35), which is connected to the convertible top bearing (22), and **in that** the collapsible roof (10) is designed as a cloth top (40) with an outer cloth cover.

2. Collapsible roof according to Claim 1, **characterized in that** the at least one connecting link (31, 32) is connected to the additional roof element (16) and to the main roof element (14).

3. Collapsible roof according to one of the preceding claims, **characterized in that** the at least one control link (35, 36) is connected to the convertible top bearing (22) and the additional roof element (16).

4. Collapsible roof according to one of the preceding claims, **characterized in that** the at least one control link (35, 36) is connected to the convertible top bearing (22) and to the connecting linkage (29).

5. Collapsible roof according to one of the preceding claims, **characterized in that** the at least one connecting link (31, 32) is connected to the control linkage (30) and to the main roof element (14).

6. Collapsible roof according to one of the preceding claims, **characterized by** a further roof element (13), in particular a roof peak (19).

7. Collapsible roof according to Claim 6, **characterized in that** the further roof element (13) is coupled into the movement of the main roof arrangement (15).

## Revendications

1. Toit escamotable (10) pour un cabriolet (1), comprenant un agencement de toit principal (15) qui comporte un élément de toit principal (14) et un dispositif de palier principal (20) doté d'un palier de capote (22) et d'une tringlerie principale (21) pour l'élément de toit principal (14), et comprenant au moins un premier agencement de toit supplémentaire (17) qui comporte un élément de toit supplémentaire (16), un dispositif de palier supplémentaire (28) doté d'une tringlerie de liaison (29) pour l'élément de toit supplémentaire (16), ainsi qu'une tringlerie de commande (30), l'élément de toit supplémentaire (16), dans la position de fermeture (ST) du toit (10), se situant en rang derrière l'élément de toit principal (14), et la tringlerie de liaison (29) comprenant au moins un premier bras de liaison (31) et au moins un deuxième bras de liaison (32) qui sont reliés à l'agencement de toit principal (15), **caractérisé en ce que** la tringlerie de commande (30) comprend seulement un premier bras de commande (35) relié au palier de capote (22), et **en ce que** le toit escamotable (10) est réalisé en tant que capote en tissu (40) dotée d'un revêtement en tissu extérieur.

2. Toit escamotable selon la revendication 1, **caractérisé en ce que** l'au moins un bras de liaison (31, 32) est relié à l'élément de toit supplémentaire (16) et à l'élément de toit principal (14).

3. Toit escamotable selon l'une quelconque des revendications précédentes, **caractérisé en ce que** l'au moins un bras de commande (35, 36) est relié au palier de capote (22) et à l'élément de toit supplémentaire (16).

4. Toit escamotable selon l'une quelconque des revendications précédentes, **caractérisé en ce que** l'au moins un bras de commande (35, 36) est relié au palier de capote (22) et à la tringlerie de liaison (29).

5. Toit escamotable selon l'une quelconque des revendications précédentes, **caractérisé en ce que** l'au moins un bras de liaison (31, 32) est relié à la tringlerie de commande (30) et à l'élément de toit principal (14).

6. Toit escamotable selon l'une quelconque des revendications précédentes, **caractérisé par** un autre élément de toit (13), en particulier une pointe de toit (19).

7. Toit escamotable selon la revendication 6, **caractérisé en ce que** l'élément de toit supplémentaire (13) est accouplé en mouvement à l'agencement de toit principal (15).
